# EUROPEAN PATENT SPECIFICATION

(11) **EP 0 535 892 B1**
(45) Date of publication and mention of the grant of the patent: **08.01.1997**
(21) Application number: 92308820.7
(22) Date of filing: 28.09.1992
(51) Int. Cl.: G02F 1/1337, G02F 1/137

(54) **Liquid crystal display device**
Flüssigkristall-Anzeigevorrichtung
Dispositif d'affichage à cristal liquide

(30) Priority: 03.10.1991 JP 256770/91
(43) Date of publication of application: 07.04.1993
(73) Proprietor: SHARP KABUSHIKI KAISHA, Osaka 545 (JP)
(72) Inventor: Itoh, Nobuyuki, Nara-shi, Nara-ken (JP)
(74) Representative: White, Martin David

(56) References cited:
- EP-A- 0 407 164
- DE-A- 2 902 126
- US-A- 4 878 742
- US-A- 5 007 716

## Description

The present invention relates to a liquid crystal display device using ferroelectric liquid crystals.

Along with the progress of information appliances represented by the computers, recently, the role of the display device as the information transmission means is becoming important. As the conventional display device, the typical one is the CRT (cathode-ray tube), but the liquid crystal display device is lately used widely from the viewpoint of downsizing of construction and reduction of power consumption. Moreover, there is a strong demand for liquid crystal display device of larger area and larger capacity, and its realization is keenly desired.

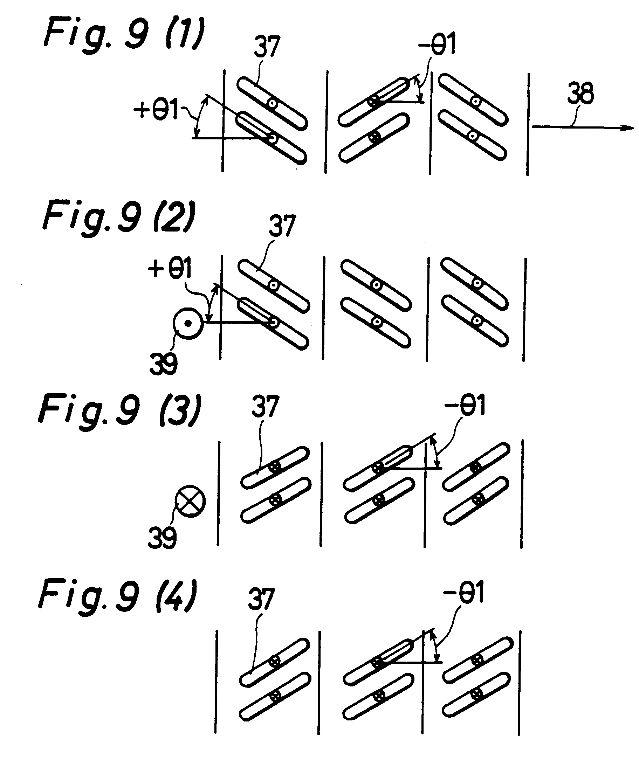

As the means for realizing such liquid crystal display device, a liquid crystal display device 21 using ferroelectric liquid crystal described below is noticed. As ferroelectric liquid crystals, usually, chiral smectic liquid crystals are used. Generally, the ferroelectric crystals have a spiral structure in the chiral smectic layer, but when implanted in a thin cell, the spiral structure is broken down due to the effects of interface, and the liquid crystal molecule 37 comes to be a mixture of, as shown in Fig. 9 (1), a domain inclined by an inclination angle of +θ1 from the smectic layer normal 38, and a domain inclined by an inclination angle of -θ1 in the reverse direction. When a voltage 39 is applied to this mixture, as shown in Fig. 9 (2), it produces a domain aligned in the direction of spontaneous polarization, that is, specific in the state of molecular orientation. Or, when the voltage 39 is reversely applied, as shown in Fig. 9 (3), it produces a domain in a specific state in the reverse direction of the molecular orientation as compared with Fig. 9 (2). In this way, the optical axis varies along with the application and reverse application of the voltage 39, and hence the liquid crystal display device 21 may be formed by using polarizers 33, 34 described below.

In this liquid crystal display device 21, if the electric field is cut off as shown in Fig. 9 (4), the molecular orientation before cutting off the electric field is maintained by the orientation defining force of the interface, and a high memory effect is obtained. This memory effect is very effective in the case of multiplex drive display of high duty.

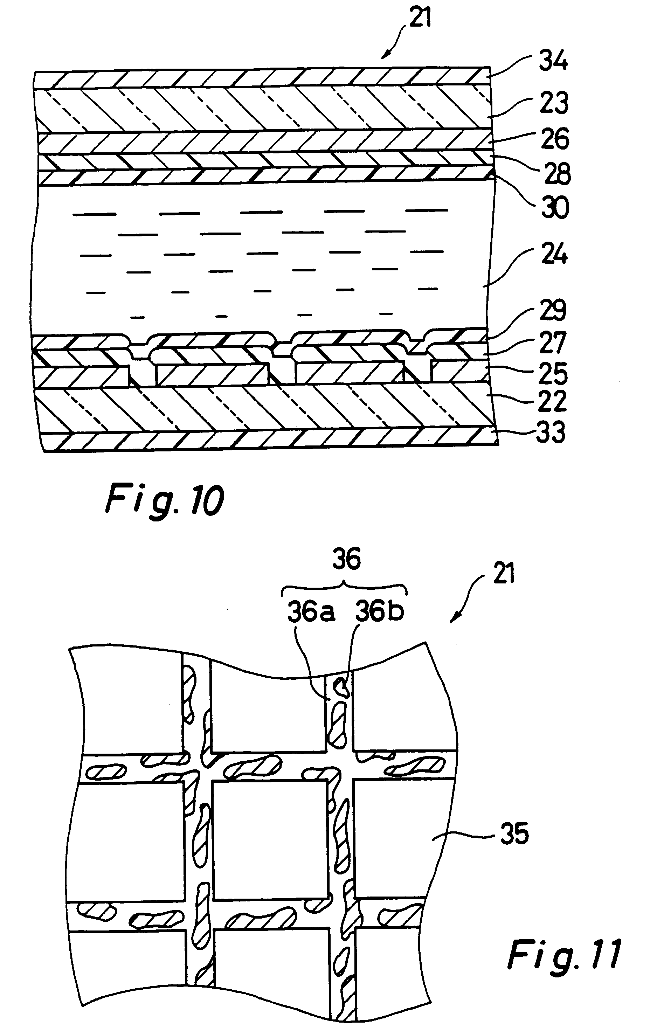

Fig. 10 is a sectional view showing the conventional liquid crystal display device 21. On the confronting surfaces of a pair of light permeable substrates 22, 23, plural band-shaped transparent electrodes 25, 26 parallel to each other are disposed, and orientation films 29, 30 are formed thereon through insulation films 27, 28. Usually, these orientation films 29, 30 are oriented so that the major axes of liquid crystal molecules 37 may be arranged horizontally to the substrates 22, 23. The space between the light permeable substrates 22, 23 is filled up with ferroelectric liquid crystals 24, and polarizers 33, 34 are laid on the surface of the outward direction of the light permeable substrates 22, 23, thereby composing the liquid crystal display device 21 having ferroelectric liquid crystals 24. In this liquid crystal display device 21, in order to obtain memory effects in two states of +θ1 and -81, the orientation defining force to orient in +θ1 and the orientation defining force to orient in -θ1 are nearly equal. In other words, the asymmetricity of orientation is smaller.

Fig. 11 is a plan view of the liquid crystal display device 21 shown in Fig. 10. In the liquid crystal display device 21 of the prior art, voltage is not applied in the non-pixel region 36 other than the pixel region 35 formed by crossing of transparent electrodes 25, 26, and moreover since the asymmetricity of orientation is small, the + θ1 inclined domain and the - θ1 inclined domain co-exist. Accordingly, as shown in Figure 11, in the non-pixel region 36 of the display screen of the liquid crystal display device 21, a bright region 36a and a dark region 36b indicated by shading co-exist, and the display screen appears to be rough, and so-called uniform blank space is not obtained, so that the display quality is lowered.

EP-A-0 407 164, on which the preamble of claim 1 is based, discloses a liquid crystal display device comprising: a pair of transparent substrates; a plurality of transparent band-shaped electrodes disposed on one substrate with a gap between each pair of adjacent electrodes; a plurality of transparent band-shaped electrodes disposed on the other substrate with a gap between each pair of adjacent electrodes, the electrodes on the one substrate being crossed with the electrodes on the other substrate; orientation films disposed on the substrates; and a ferro-electric liquid crystal disposed between the substrates. On one substrate, a first insulation layer is disposed over the pixels and a second insulation layer is disposed over the non-display regions between pixels.

GB-A-2 023 866 discloses a liquid crystal display device which uses a guest-host liquid crystal. A non-homogenous planar alignment film is disposed on the substrates in regions intended for permanent display, and homotropic alignment layers are provided in other regions.

According to the present invention there is provided a liquid crystal display device of the above type characterised in that the first orientation films are disposed over the gaps between adjacent electrodes and orientate liquid crystal molecules to be perpendicular to the substrates; and in that the device further comprises second orientation films disposed over the electrodes wherein the second orientation films orientate liquid crystal molecules to be parallel to the substrates.

In a preferred embodiment, the first orientation films are formed over substantially the entire surface of the substrates, and the second orientation films are formed on the first orientation films on the region of the band-shaped transparent electrodes.

In a preferred embodiment a low resistance conductive film which consists of a long part formed along the longitudinal direction of the band-shaped transparent electrodes of one substrate and short parts formed at the positions corresponding to the gaps of the band-shaped transparent electrodes of the opposite substrate, orthogonal to the long part is formed at one lateral end of the band-shaped transparent electrodes.

According to the invention, in the liquid crystal display device forming mutually parallel plural band-shaped transparent electrodes through a gap, disposing a pair of light permeable substrates forming orientation films nearly over the entire surface of the band-shaped transparent electrode forming area so that the band-shaped transparent electrodes may confront and cross orthogonally, and being formed between the pair of light permeable substrates through intervening liquid crystals, the orientation films on the band-shaped transparent electrodes are horizontally oriented, while the orientation film on the gap of the band-shaped transparent electrodes is vertically oriented. Horizontal orientation is such treatment as to orientate the liquid crystal molecules horizontally to the light permeable substrate, and vertical orientation is such treatment as to orientate the liquid crystal molecules vertically to the light permeable substrate.

When the liquid crystal display device is formed so that the pair of light permeable substrates forming band-shaped transparent electrodes may confront orthogonally, the crossing region of the confronting band-shaped transparent electrodes is the pixel region for display. When the liquid crystal display device is formed by using thus oriented light permeable substrates, in the pixel region, the orientation films on all light permeable substrates are orientated horizontally. By contrast, the region in which at least one light permeable substrate has a gap of band-shaped transparent electrodes is a non-pixel region which is not displayed, and in the non-pixel region, at least one light permeable substrate is orientated vertically. Since the non-pixel region is vertically orientated, the liquid crystal molecules in the non-pixel region are not orientated horizontally. Therefore, the orientation of the liquid crystal molecules is almost vertical, and the light passing through the non-pixel region passes only slightly by setting the polarizers installed at the incident light side and exit light side of the liquid crystal display device in cross Nicol, so that a nearly perfect dark viewing field is obtained.

In the invention, relating to the liquid crystal display device in which a pair of light permeable substrates forming band-shaped transparent electrodes are formed confrontingly so that the band-shaped transparent electrodes may cross orthogonally, the pixel region formed by crossing of the confronting band-shaped transparent electrodes is horizontally oriented, while the non-pixel region is vertically orientated at least on one light permeable substrate. Therefore, when polarizers of cross Nicol are disposed on the surface of the liquid crystal display device, the display of non-pixel regions may be adjusted to a uniform dark viewing field. Therefore, possessing a display characteristic of excellent contrast, the display quality of the liquid crystal display device is enhanced.

### BRIEF DESCRIPTION OF THE DRAWINGS

Other and further objects, features, and advantages of the invention will be more explicit from the following detailed description taken with reference to the drawings wherein:

Fig. 1 is a sectional view showing a liquid crystal display device in an embodiment of the invention.

Fig. 2 is a plan view of the liquid crystal display device 1 shown in Fig. 1.

Fig. 3 is a sectional view showing the molecular orientation of liquid crystal molecules 17 of a first non-pixel region 16b shown in Fig. 2.

Fig. 4 is a sectional view showing the molecular orientation of liquid crystal molecules 17 of the first non-pixel region 16b shown in Fig. 2.

Fig. 5 is a sectional view showing the molecular orientation of liquid crystal molecules 17 of a second non-pixel region 16a shown in Fig. 2.

Fig. 6 is a process chart for explaining the treating process for forming insulation films 7, 8 and orientation films 9, 10, 11, 12 on substrates 2, 3.

Fig. 7 is a sectional view for explaining the treating process shown in Fig. 6.

Fig. 8 is a perspective view showing band-shaped transparent electrodes 5, 6 used in other embodiment of the invention.

Fig. 9 is a diagram for explaining the operation of ferroelectric liquid crystal molecules 37.

Fig. 10 is a sectional view showing a conventional liquid crystal display device 21.

Fig. 11 is a plan view of the liquid crystal display device shown in Fig. 10.

### DETAILED DESCRIPTION OF THE PREFERRED EMBODIMENTS

Now referring to the drawing, preferred embodiments of the invention are described below.

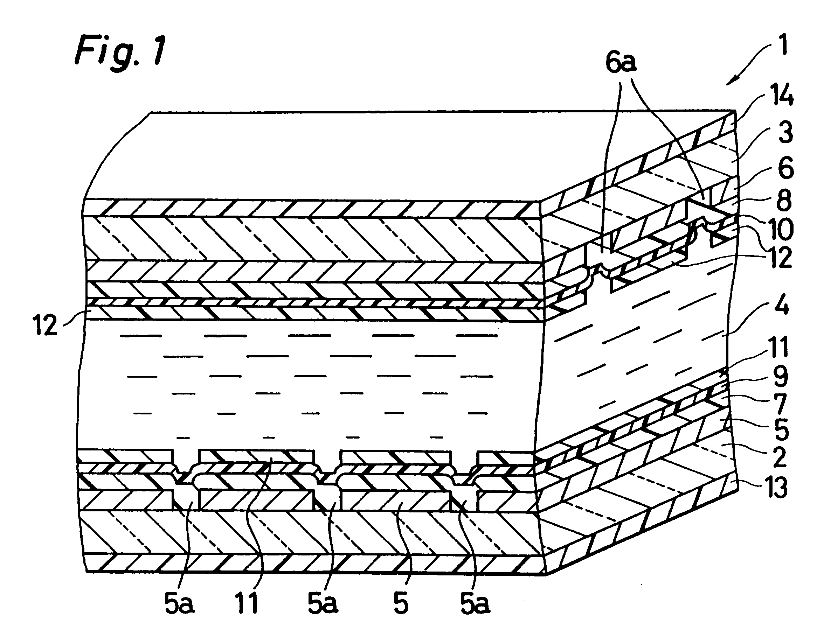

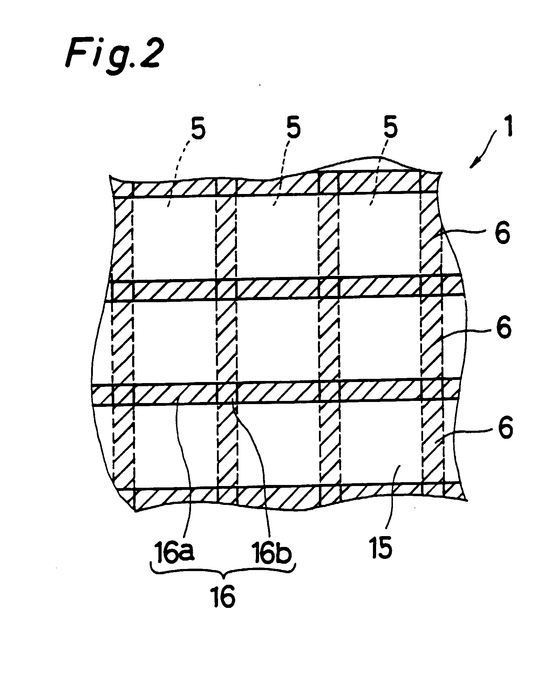

Fig. 1 is a sectional view showing a liquid crystal display device 1 possessing ferroelectric liquid crystal 4 as an embodiment of the invention, and Fig. 2 is a plan view showing the liquid crystal display device 1 shown in Fig. 1. On light permeable substrates 2, 3 made of glass or the like, band-shaped transparent electrodes 5, 6 for forming a matrix structure are disposed parallel through gaps 5a, 6a, and further thereon are formed insulation films 7, 8 and first orientation films 9, 10 nearly over the entire surface of the forming area of the electrodes 5, 6. Second orientation films 11, 12 are formed on the regions of the electrodes 5, 6 on the first orientation films 9, 10. The first orientation films 9, 10 are vertically orientated, while the second orientation films 11, 12 are horizontally orientated. By pasting together with the ferroelectric liquid crystals 4 so that the substrates 2, 3 may confront and the electrodes 5, 6 may cross orthogonally, the liquid crystal display device 1 is obtained.

In this way, since the second orientation films 11, 12 are formed on the regions of the electrodes 5, 6 on the first orientation films 9, 10, the regions of the electrodes 5, 6 are horizontally oriented, while the gaps 5a, 6a of the electrodes 5, 6 not forming the second orientation films 11, 12 thereon are vertically oriented.

As shown in Fig. 2, the intersecting region of the orthogonally crossing electrodes 5, 6 is a pixel region 15, at least in one of the substrates 2, 3, the region to be gaps 5a, 6a of the electrodes 5, 6 is a non-pixel region 16 which is not displayed. The non-pixel region 16 consists of a first non-pixel region 16b which is gaps 5a, 6a of electrodes 5, 6 in both substrates 2, 3, and a second non-pixel region 16a which is gaps 5a, 6a of electrodes 5, 6 in either one of the substrates 2, 3.

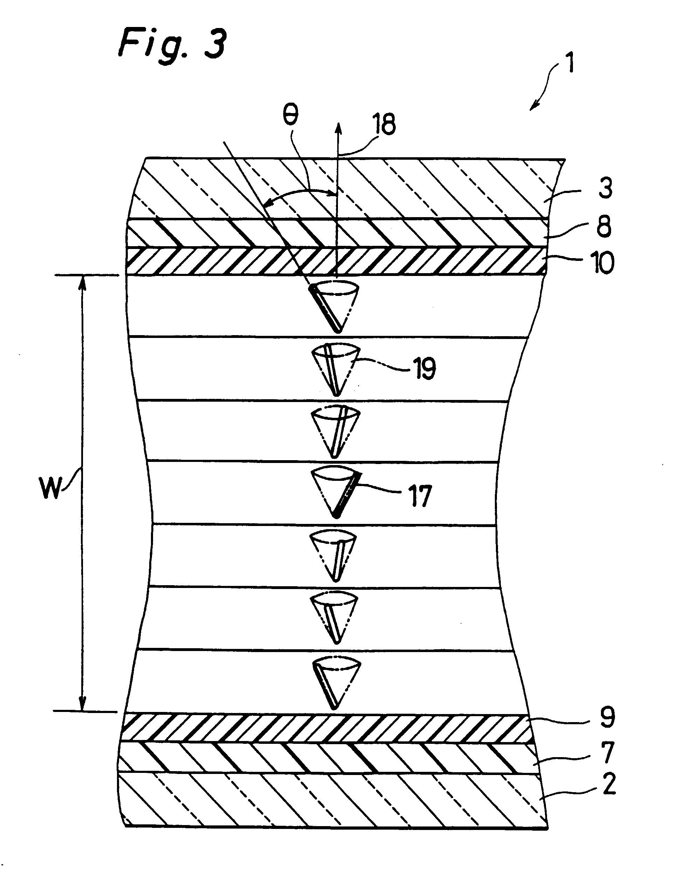

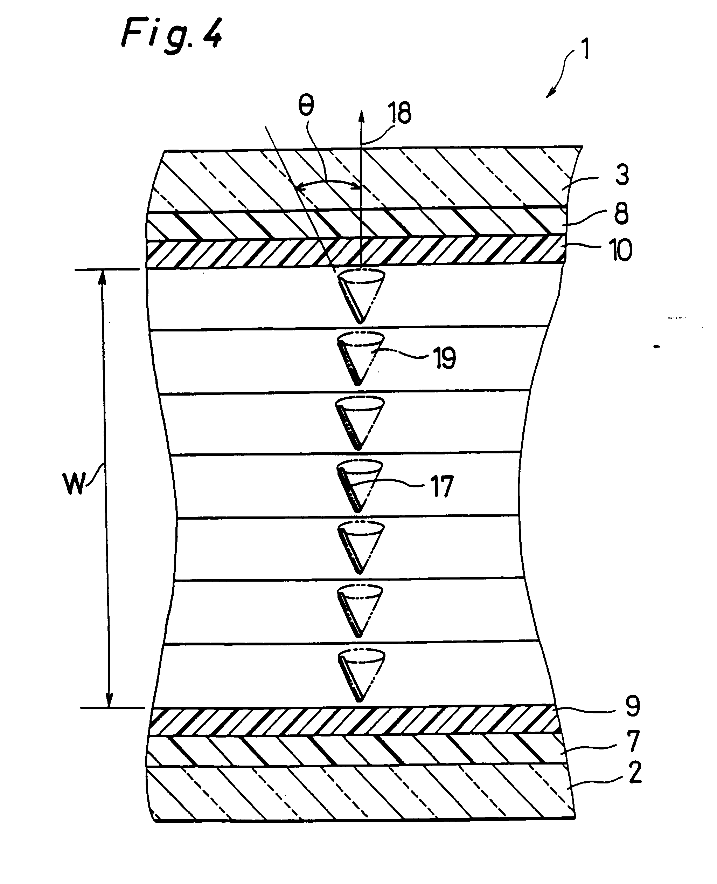

Fig. 3 and Fig. 4 are sectional views showing the molecular orientation of liquid crystal molecules 17 of the first non-pixel region 16b shown in Fig. 2. Fig. 3 relates to a case in which the cell thickness W for accommodating the liquid crystals 4 of the liquid crystal display device 1 is greater than the spiral pitch of the ferroelectric liquid crystals 4, and Fig. 4 shows a case in which the cell thickness W is smaller than the spiral pitch of the ferroelectric liquid crystals 4.

In Fig. 3 and Fig. 4, the sectional view of the first non-pixel region 16b which is the region of the gaps 5a, 6a of the electrodes 5, 6 of the substrates 2, 3 is shown, and in the first non-pixel region 16b, the first orientation films 9, 10 oriented in the vertical direction in both substrates 2, 3 are contacting with the liquid crystals 4. Therefore, in the first non-pixel region 16b, a layer normal 18 is a structure vertical to the substrates 2, 3. The liquid crystal molecules 17 are inclined by an angle θ to the layer normal 18. In the liquid crystal molecules 17 are shown conical spaces 19 in which the liquid crystal molecules 17 can change orientation within the layer of the liquid crystals 4.

As shown in Fig. 3, when the cell thickness W is greater than the spiral pitch of the liquid crystals 4, the liquid crystal molecules 17 show a spiral molecular orientation. As shown in Fig. 4, when the cell thickness W is smaller than the spiral pitch, the liquid crystal molecules 17 have a loose non-spiral molecular orientation.

Usually, in order to obtain a bistable memory effect in the pixel region 15, the cell thickness W must be set smaller than the spiral pitch of the liquid crystals 4. Therefore, in the first non-pixel region 16b, the liquid crystal molecules 17 have a loose non-spiral molecular orientation as shown in Fig. 4.

The liquid crystal molecules 17 shown in Fig. 4 are inclined, as mentioned above, by an angle θ with respect to the layer normal 18, but the angle θ is mostly less than 30°, and the liquid crystal molecules 17 stand up almost vertically to the substrates 2, 3, and by holding between cross Nicol of polarizers 13, 14, light transmission is very slight, and nearly a complete dark viewing field is obtained.

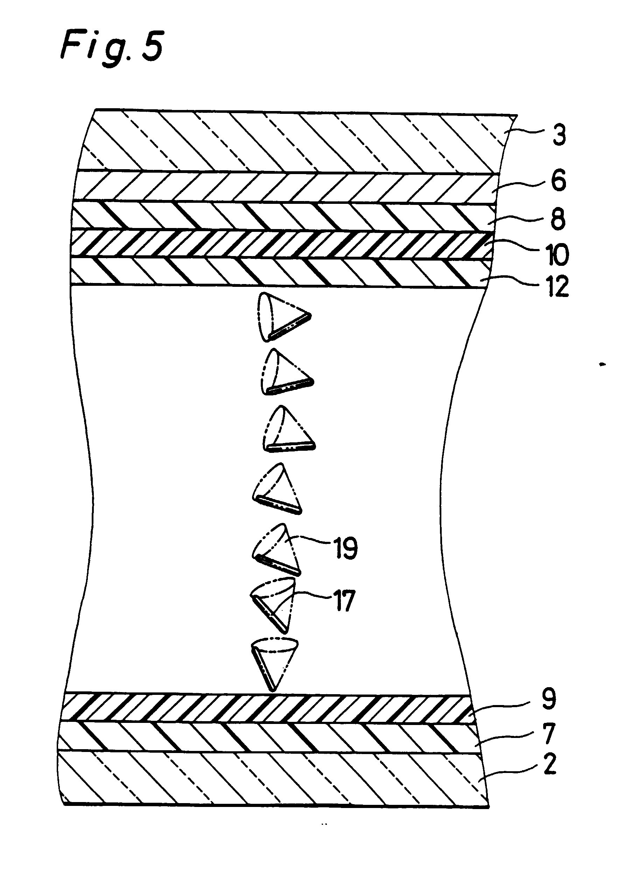

Fig. 5 is a sectional view showing the molecular orientation of the liquid crystal molecules 17 in the second non-pixel region 16a shown in Fig. 2. In the second non-pixel region 16a, either one of the substrates 2, 3 possesses the electrode 5 or 6. In Fig. 5, since the electrode 5 is not formed on the substrate 2, on the surface of the substrate 2, the first orientation film 9 oriented vertically is formed, while the electrode 6 is formed on the substrate 3, and hence on the surface of the substrate 3, a second orientation film 12 oriented in the horizontal direction is formed. Therefore, in the second non-pixel region 16a, the liquid crystal molecules 17 oriented horizontally on one substrate 3 are gradually oriented horizontally toward the other substrate 2, thereby forming the so-called hybrid orientation. Accordingly, in most cases, the display is a blue-tinted gray color. The same holds true when the second orientation film 11 is formed on the substrate 2, and the first orientation film 10 on the substrate 3.

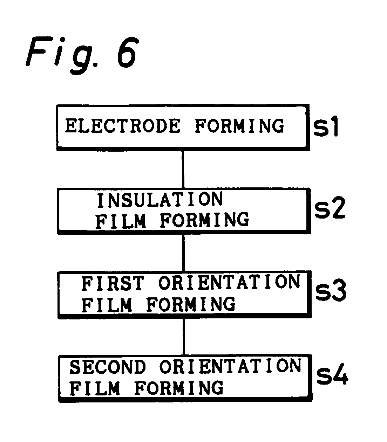

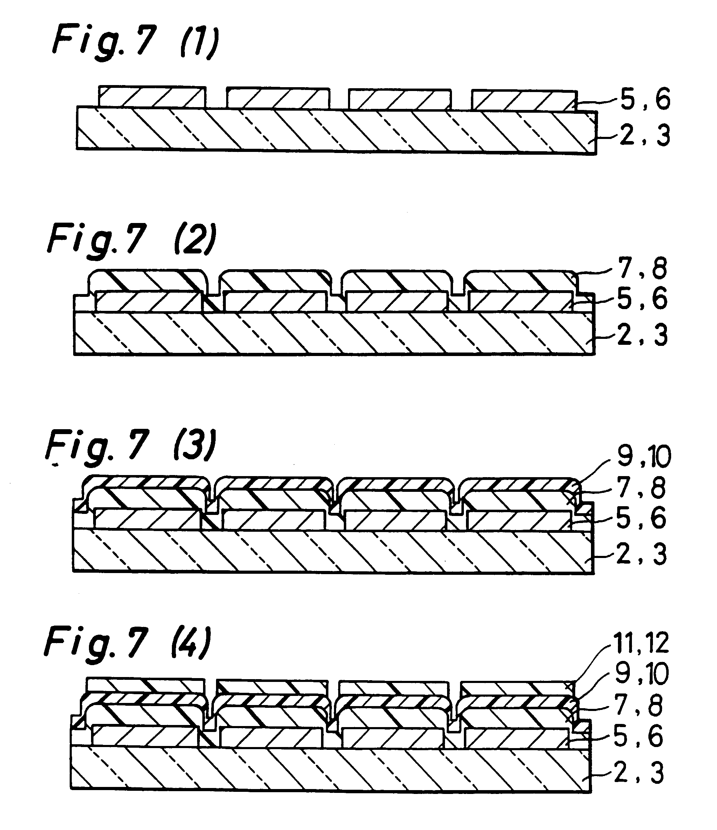

Fig. 6 is a process chart for explaining the treating process of applying, in the liquid crystal display device 1 shown in Fig. 1, horizontal orientation to the region of the electrodes 5, 6 of the light permeable substrates 2, 3, and applying vertical orientation to the gaps 5a, 6a of the electrodes 5, 6, and Fig. 7 is a sectional view for explaining the treating process shown in Fig. 6. At step s1 in Fig. 6, as shown in Fig. 7 (1), plural band-shaped transparent electrodes 5, 6 are formed mutually parallel on the light permeable substrates 2, 3, and at step s2, as shown in Fig. 7 (2), SiO₂ is evaporated by sputtering, and insulation films 7, 8 are formed. The insulation films 7, 8 are intended to avoid electric contact of the substrates 2, 3 when the two substrates are glued together.

At step s3, materials of orientation films 9, 10 such as polyimide are applied on the surface of the formed insulation films 7, 8, and vertical orientation is applied by any known means to form first orientation films 9, 10 possessing vertical orientation as shown in Fig. 7 (3). Here, the known means may be, for example, a method of applying a solution containing silane coupling agent or chrome complex on substrates, or immersing the substrates in a solution, and then heating and drying. Aside from the method by chemical adsorption of orientation materials, CTAB (cetyl trimethyl ammonium bromide) or lecithin or the like may be physically adsorbed in a similar manner.

At step s4, Nylon 6 (tradename of Toray; 1% methacresol solution) is applied on the electrodes 5, 6 by printing method, and baked, thereby forming second orientation films 11, 12 as shown in Fig. 7 (4). The second orientation films 11, 12 may be made of any materials, such as polyimides and polyvinyl alcohol, as far as possessing the function of horizontally orienting the liquid crystal molecules 17.

Thus formed light permeable substrates 2, 3 are rubbed to be parallel or anti-parallel, and cells are formed in a cell thickness of, for example, 1.8 µm, so that the electrodes 5, 6 may intersect with each other to compose a matrix electrode construction, and ferroelectric liquid crystals 4 are implanted to seal, and two polarizers 13, 14 are installed on the outside surface of form the liquid crystal display device 1 as shown in Fig. 1. The rubbing direction is selected depending on the liquid crystal display device 1 to be formed.

This liquid crystal display device 1 has a favorable bistable memory state in the pixel region 15 in Fig. 2, and as the molecular orientation of the non-pixel region 16 is made uniform, a uniform blank space may be obtained in the non-pixel region 16 in Fig. 2, thereby enhancing the display quality. In horizontal orientation treatment when forming the second orientation films 11, 12, so as not to sacrifice the effect of horizontal orientation on the gaps 5a, 6a of the electrodes 5, 6, it is desired to adjust the rubbing strength by using a cloth of short bristles of 1 mm or less so that horizontal orientation may be applied only on the electrodes 5, 6.

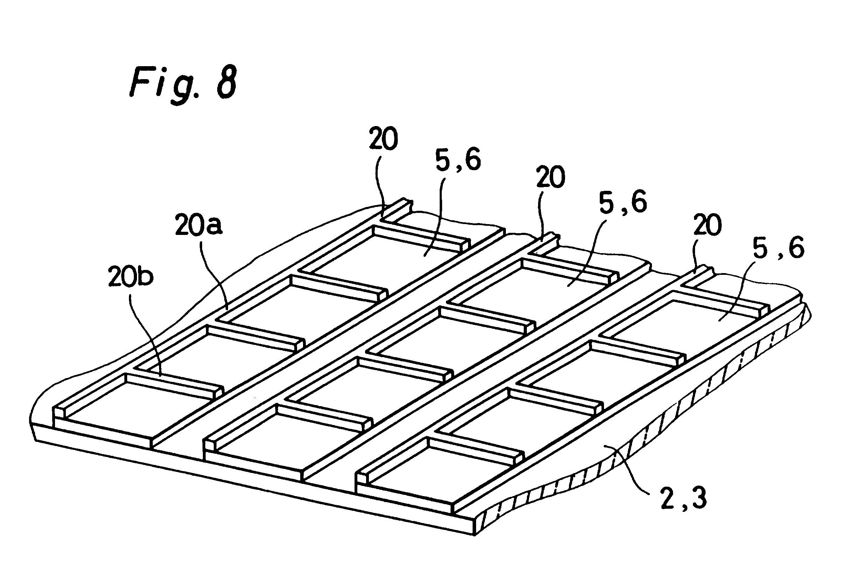

Fig. 8 is a perspective view showing the electrodes 5, 6 used in other embodiment of the invention. The same parts as in the foregoing embodiment are identified with the same reference numbers. In this embodiment, on the electrodes 5, 6, a non-permeable low resistance conductive film 20 in a comb shape is formed, which consists of a longer part 20a formed on the ends of the electrodes 5, 6 along the longitudinal direction of the band-shaped electrodes 5, 6, and a short part 20b formed orthogonally in the longitudinal direction of the band-shaped electrodes 5, 6. The low resistance conductive film 20 is made of, for example, molybdenum. The short part 20b of the low resistance conductive film 20 is formed at a position corresponding to the gaps 5a, 6a of the confronting electrodes 5, 6 when forming the liquid crystal display device 1.

After forming the low resistance conductive film 20 on the electrodes 5, 6, same as in the foregoing embodiment, insulation films 7, 8, and first and second orientation films 9, 10, 11, 12 are formed, and the liquid crystal display device 1 is formed so that the short part 20b of the low resistance conductive film 20 formed on the electrodes 5, 6 may be positioned on the gaps 6a, 5a of the confronting electrodes 6, 5.

In the foregoing embodiment, the second non-pixel region 16a presented a bluish gray display, while, in this embodiment, at the position corresponding to the second non-pixel region 16a, the non-permeable short part 20b is formed on either one of the electrodes 5, 6, and the light is shielded completely, and moreover since the first non-pixel region 16b is oriented vertically same as in the foregoing embodiment, as compared with the non-pixel region 16 in the foregoing embodiment, a uniform blank space is obtained in a better dark viewing field, so that the display quality may be further enhanced.

In the liquid crystal display device 21 using the ferroelectric liquid crystals 24 of the prior art, the problems also included the non-uniformity of display characteristic due to application of non-uniform voltage, and inversion of memory state in the pixel region 35.

In the former problem, if the electric resistance of the transparent electrodes 25, 26 is great, the voltage applied from one end of the transparent electrodes 25, 26 is largely attenuated at the other end of the transparent electrodes 25, 26, and therefore the voltage applied to the layer of liquid crystals 24 is non-uniform, and hence the display characteristic of the liquid crystal display device 21 becomes non-uniform. Hitherto, as the solving means, a low resistance conductive film of metal or the like smaller in electric resistance than the transparent electrodes 25, 26 was laid down tightly along the longitudinal direction of the transparent electrodes 25, 26 to decrease the electric resistance of the transparent electrodes 25, 26, among other methods.

The latter problem is a phenomenon of returning to the state of Fig. 9 (4), without holding the state of Fig. 9 (2), when the electric field is removed after switching as in Fig. 9 (2) by applying the electric field in the state as in Fig. 9 (4). This phenomenon was explained to be induced by reverse electric field caused by spontaneous polarization of the ferroelectric liquid crystals 24 (Yoshida, et al., Preprinted Papers for the 13th Discussion on Liquid Crystals 2Z15, 1987), but by further investigations it has been known that such inversion of memory state is likely to occur from the edge portion of the transparent electrodes 25, 26 (Japanese Laid-open Patent Hei. 1-179915), and as the preventive measure of such inversion it is reported to be effective to use a metal wiring of low resistance laid on the transparent electrodes 25, 26 (Japanese Laid-open Patents Hei. 1-179915, Hei. 1-280724, Hei. 2-63019, etc.).

According to the embodiment, the non-pixel region 16 is a uniform dark viewing field, and the applied voltage is not attenuated, and the memory state in the pixel region 15 is not inverted, so that a favorable characteristic is obtained on the entire screen, thereby enhancing the display quality of the liquid crystal display device 1.

In the embodiment, molybdenum is used as the non-permeable low resistance conductive film 20, but same effects are obtained by using aluminum, titanium, tantalum of the like instead of molybdenum.

The invention may be embodied in other specific forms without departing from the essential characteristics thereof. The present embodiments are therefore to be considered in all respects as illustrative and not restrictive, the scope of the invention being indicated by the appended claims rather than by the foregoing description and all changes which come within the meaning and the range of equivalency of the claims are therefore intended to be embraced therein.

## Claims

1. A liquid crystal display device (1) comprising:
a pair of transparent substrates (2,3);
a plurality of transparent band-shaped electrodes (5) disposed on one substrate (2) with a gap (5a) between each pair of adjacent electrodes;
a plurality of transparent band-shaped electrodes (6) disposed on the other substrate (3) with a gap (6a) between each pair of adjacent electrodes, the electrodes on the one substrate being crossed with the electrodes on the other substrate;
first orientation films (9, 10) disposed on the substrates (2,3); and
a ferro-electric liquid crystal (4) disposed between the substrates;
characterised in that the first orientation films (9, 10) are disposed over the gaps (5a,6a) between adjacent electrodes (5,6) and orientate liquid crystal molecules (17) to be perpendicular to the substrates; and in that the device further comprises second orientation films (11, 12) disposed over the electrodes (5,6) wherein the second orientation films (11, 12) orientate liquid crystal molecules (17) to be parallel to the substrates.

2. A liquid crystal display device (1) as claimed in claim 1, wherein the first orientation films (9, 10) are formed over substantially the entire surface of the substrates (2,3), and the second orientation films (11,12) are formed on the first orientation films (9, 10) on the region of the band-shaped transparent electrodes (5,6).

3. A liquid crystal display device (21) as claimed in claim 1 or 2, wherein a low resistance conductive film (20) which consists of a long part (20a) formed along the longitudinal direction of the band-shaped transparent electrodes (5,6) of one substrate, and short parts (20b) formed at the positions corresponding to the gaps (5a, 6a) of the band-shaped transparent electrodes (5, 6) of the opposite substrate orthogonal to the long part (20a) is formed at one lateral end of the band-shaped transparent electrodes (5,6).

## Patentansprüche

1. Flüssigkristall-Anzeigevorrichtung (1) mit:
- einem Paar transparenter Substrate (2, 3);
- einer Vielzahl transparenter, bandförmiger Elektroden (5), die auf einem Substrat (2) unter Einhaltung eines Zwischenraums (5a) zwischen jedem Paar benachbarter Elektroden angeordnet sind;
- einer Vielzahl transparenter, bandförmiger Elektroden (6), die auf dem anderen Substrat (3) unter Einhaltung eines Zwischenraums (6a) zwischen jedem Paar benachbarter Elektroden angeordnet sind, wobei die Elektroden auf dem einen Substrat die Elektroden auf dem anderen Substrat überkreuzen;
- ersten Ausrichtungsfilmen (9, 10), die auf den Substraten (2, 3) angebracht sind; und
- einem ferroelektrischen Flüssigkristall (4), der zwischen den Substraten angebracht ist;
**dadurch gekennzeichnet**, dass die ersten Ausrichtungsfilme (9, 10) über den Zwischenräumen (5a, 6a) zwischen benachbarten Elektroden (5, 6) angeordnet sind und sie Flüssigkristallmoleküle (17) so ausrichten, dass sie rechtwinklig zu den Substraten stehen; und dass die Vorrichtung ferner zweite Ausrichtungsfilme (11, 12) aufweist, die über den Elektroden (5, 6) angebracht sind, wobei diese zweiten Ausrichtungsfilme (11, 12) die Flüssigkristallmoleküle (17) so ausrichten, dass sie parallel zu den Substraten verlaufen.

2. Flüssigkristall-Anzeigevorrichtung (1) nach Anspruch 1, bei der die ersten Ausrichtungsfilme (9, 10) auf im wesentlichen der gesamten Fläche der Substrate (2, 3) ausgebildet sind und die zweiten Ausrichtungsfilme (11, 12) im Bereich der bandförmigen, transparenten Elektroden (5, 6) auf den ersten Ausrichtungsfilmen (9, 10) ausgebildet sind.

3. Flüssigkristall-Anzeigevorrichtung (21) nach einem der Ansprüche 1 oder 2, bei der ein leitender Film (20) mit niedrigem Widerstand an einem Querende der bandförmigen, transparenten Elektroden (5, 6) ausgebildet ist, und er aus einem langen Teil (20a), der entlang der Längsrichtung der bandförmigen, transparenten Elektroden (5, 6) des einen Substrats ausgebildet ist, und einem kurzen Teil (20b) besteht, der an den den Zwischenräumen (5a, 6a) der bandförmigen, transparenten Elektroden (5, 6) des gegenüberstehenden Substrats entsprechenden Positionen rechtwinklig zum langen Teil (20a) ausgebildet ist.

## Revendications

1. Dispositif d'affichage à cristaux liquides (1) comprenant:
deux substrats transparents (2, 3);
plusieurs électrodes transparentes en forme de bande (5) disposées sur un premier substrat (2), un intervalle (5a) étant ménagé entre les deux électrodes de chaque paire d'électrodes adjacentes;
plusieurs électrodes transparentes en forme de bande (6) disposées sur le second substrat (3) avec un intervalle (6a) entre les deux électrodes de chaque paire d'électrodes adjacentes, les électrodes situées sur le premier substrat étant croisées avec les électrodes situées sur le second substrat;
des premiers films d'orientation (9, 10) disposés sur les substrats (2, 3); et
des cristaux liquides ferroélectriques (4) disposés entre les substrats;
caractérisé en ce que les premiers films d'orientation (9, 10) sont disposés par dessus les intervalles (5a, 6a) présents entre des électrodes adjacentes (5, 6) et orientent les molécules de cristaux liquides (17) perpendiculairement aux substrats; et en ce que le dispositif comprend, en outre, des deuxièmes films d'orientation (11, 12) disposés par dessus les électrodes (5, 6), les deuxièmes films d'orientation (11, 12) orientant les molécules de cristaux liquides (17) parallèlement aux substrats.

2. Dispositif d'affichage à cristaux liquides (1) tel que défini dans la revendication 1, dans lequel les premiers films d'orientation (9, 10) sont formés sur sensiblement la surface entière des substrats (2, 3), et les deuxièmes films d'orientation (11, 12) sont formés sur les premiers films d'orientation (9, 10), sur les régions couvertes par les électrodes transparentes en forme de bande (5, 6).

3. Dispositif d'affichage à cristaux liquides (21) tel que défini dans la revendication 1 ou 2, dans lequel un film conducteur à faible résistance (20), qui se compose d'une partie longue (20a) formée le long des électrodes transparentes en forme de bande (5, 6) d'un substrat, dans la direction longitudinale de ces dernières, et de parties courtes (20b) formées aux emplacements correspondant aux intervalles (5a, 6a) des électrodes transparentes en forme de bande (5, 6) du substrat situé en vis-à-vis, perpendiculairement à la partie longue (20a), est formé sur une extrémité latérale des électrodes transparentes en forme de bande (5, 6).
